# EUROPEAN PATENT APPLICATION

(11) **EP 4 826 977 A1**
(43) Date of publication of application: **21.10.2026**
(21) Application number: 25170856.6
(22) Date of filing: 16.04.2025
(51) Int. Cl.: H02M 3/00, H02M 3/335

(54) **ISOLATED CONVERTER**

(71) Applicant: Tridonic GmbH & Co KG, 6851 Dornbirn (AT)
(72) Inventor: Lochmann, Frank, 6851 Dornbirn (AT); Schneider, Miguel Philipp, 6851 Dornbirn (AT)
(74) Representative: Rupp, Christian

(57) **Abstract**

The invention relates to an isolated converter (10), comprising: a galvanic isolation stage (13); at least two primary windings (Lm) on a primary side of the isolation stage (13), wherein the primary windings (Lm) are connected in series; and a plurality of secondary windings (Ls) on the secondary side of the isolation stage (13), wherein the primary windings (Lm) are magnetically coupled to the secondary windings (Ls) in order to transfer energy from the primary to the secondary side of the isolation stage (13). The isolated converter (10) further comprises a bypass switch (11) arranged to selectively bypass a subset of the primary windings (Lm) when closed, such that the bypassed primary windings (Lm) do not contribute to the energy transfer; and a control unit (12) configured to control the bypass switch (11).

## Description

### TECHNICAL FIELD OF THE INVENTION

The invention relates to an isolated converter, in particular to an LLC converter. The invention further relates to an electrical power supply for supplying a load with electrical energy.

### BACKGROUND OF THE INVENTION

Isolated converters, such as LLC converters, are power conversion devices that use a transformer to separate their input and output sides. This provides additional safety, as the output can be protected from interferences from the input side.

In general, the output voltage of an LLC converter is determined by the turn ratio of its transformer windings. Some LLC converters allow adjusting the output voltage via the switching frequency of power switches of a switching bridge on the primary side of the converter. However, this adjustability is limited. For instance, to set a low output voltage, a high switching frequency of the power switches would have to be set which, however, leads to high losses and is therefore avoided.

### SUMMARY OF THE INVENTION

Thus, it is an object of the invention to provide an isolated converter with improved adjustability of its output voltage.

The object is achieved by the embodiments provided in the enclosed independent claims. Advantageous implementations of the embodiments of the disclosure are further defined in the dependent claims.

According to a first aspect, the invention relates to an isolated converter, comprising: a galvanic isolation stage; at least two primary windings on a primary side of the isolation stage, wherein the primary windings are connected in series; a plurality of secondary windings on the secondary side of the isolation stage, wherein the primary windings are magnetically coupled to the secondary windings in order to transfer energy from the primary to the secondary side of the isolation stage. The isolated converter further comprises: a bypass switch arranged to selectively bypass a subset of the primary windings when closed, such that the bypassed primary windings do not contribute to the energy transfer; and a control unit configured to control the bypass switch.

This achieves the advantage that the turn ratio between primary and secondary windings can be quickly and easily adjusted by opening/closing the bypass switch. As the output voltage is determined by this turn ratio, this allows to switch between two different output voltages. For instance, in conjunction with a further adjustability of the output voltage via a switching frequency of primary side power switches, this leads to a significant expansion of the adjustable output voltage levels for any given input voltage of the converter.

The isolated converter can be a DC/DC converter which converts a DC input signal to a DC output signal of a different voltage level.

Each secondary winding of the isolated converter can be magnetically coupled to one of the primary windings. Thereby, one primary winding can be coupled to more than one secondary winding.

For example, if the bypass switch is open, energy flows through all primary windings and they distribute the energy over all magnetically coupled secondary winding. If the bypass switch is closed, no energy flows through the "bypassed" primary winding and consequently no energy is transferred to the secondary windings which are coupled to the bypassed primary winding.

In an implementation form, a first terminal of the bypass switch is connected to a node between two of the primary windings connected in series.

In an implementation form, a second terminal of the bypass switch is connected to a node after the series connection of the primary windings and/or to a ground terminal of the isolated converter.

In an implementation form, the plurality of secondary windings is connected in parallel.

In an implementation form, the isolated converter further comprises: a plurality of rectification circuits on the secondary side of the isolation stage, wherein each secondary winding is connected to one of the rectification circuits.

In an implementation form, a plurality of secondary sides or secondary side stages of the converter may be connected in parallel.

In an implementation form, each rectification circuit comprises a controllable switch. This achieves the advantage that an active and/or synchronous rectification can be performed on the secondary side.

In an implementation form, the subset of the primary windings is magnetically coupled to a subset of the secondary windings; wherein the control unit is configured to open the controllable switch of each rectification circuits which is connected to one of the subset of the secondary windings when the bypass switch is closed. In this way, the secondary windings, which do not receive energy from the primary side when the bypass switch is closed, can be disconnected from the remaining secondary side circuit for as long as the bypass switch remains closed.

In an implementation form, the control unit is configured to close the bypass switch when a voltage across the primary windings is zero. This achieves the advantage that a zero-voltage switching of the bypass switch can be realized. This can reduce switching losses and enhance efficiency.

In an implementation form, the isolated converter is operable in a first operating mode and in a second operating mode; wherein, in the first operating mode, the control unit is configured to permanently open the bypass switch, and, in the second operating mode, the control unit is configured to permanently close the bypass switch. This achieves the advantage that the isolated converter can set two different turn ratios of the transformer for a longer operating time.

In an implementation form, the control unit is configured to alternately open and close the bypass switch with a first switching frequency. This achieves the advantage that the isolated converter can further adjust the output voltage by means of fast switching of the bypass switch.

For instance, the control unit is configured to drive the bypass switch with a PWM signal. A duty cycle of the PWM signal can be adjusted to further adapt the output voltage of the converter.

In an implementation form, the isolated converter further comprises a switching circuit on the primary side of the galvanic isolation stage, wherein the switching circuit comprises at least two power switches; wherein the control unit is configured to alternately open and close the power switches of the switching circuit with a second switching frequency.

For instance, the switching circuit comprises two or four power switches. By means of a switching frequency of said power switches, the output voltage can additionally be adjusted within a certain range. This adjustability can be expanded by means of the bypass switch, so that the output voltage of the converter can be set in a wider range.

The power switches can be configured to modulate an input voltage signal, e.g., to generate a square wave signal based on a stable input voltage.

In an implementation form, the first switching frequency is an integer multiple of the second switching frequency.

In an implementation form, the isolated converter further comprises a matrix transformer, wherein the primary and the secondary windings are components of the matrix transformer.

A matrix transformer is a special kind of transformer which can comprise a plurality of transformer elements, e.g. multiple cores, arranged in a specific pattern (e.g., along an axis). The matrix transformer can form or comprise the galvanic isolation stage.

In an implementation form, the isolated converter is an LLC converter.

According to a second aspect, the invention relates to an electrical power supply comprising the isolated converter according to the first aspect of the invention.

### BRIEF DESCRIPTION OF THE DRAWINGS

Exemplary embodiments of the invention are now further explained with respect to the drawings by way of example only, and not for limitation. In the drawings:
- Fig. 1: shows a circuit diagram of an isolated converter according to an embodiment;
- Figs. 2A-2C: show top views of exemplary embodiments of a matrix transformer of an isolated converter;
- Fig. 3: shows a cross-sectional view of a transformer core of an isolated converter according to an embodiment; and
- Fig. 4: shows a schematic diagram of an electrical power supply according to an embodiment.

### DETAILED DESCRIPTION OF EMBODIMENTS

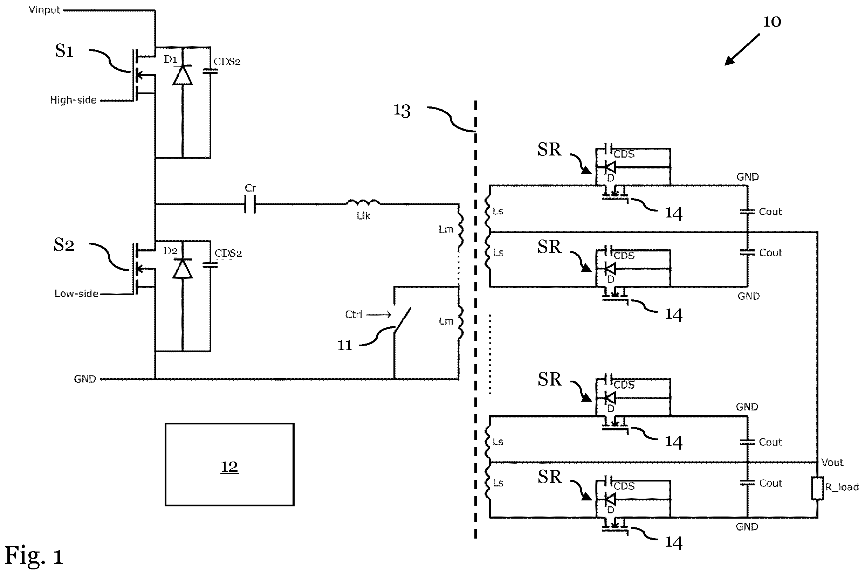

Fig. 1 shows a circuit diagram of an isolated converter 10 according to an embodiment.

The isolated converter 10 comprises: a galvanic isolation stage 13; at least two primary windings Lm on a primary side of the isolation stage 13, wherein the primary windings Lm are connected in series; and a plurality of secondary windings Ls on the secondary side of the isolation stage 13, wherein the primary windings Lm are magnetically coupled to the secondary windings Ls in order to transfer energy from the primary to the secondary side of the isolation stage 13. The isolated converter further comprises a bypass switch 11 arranged to selectively bypass a subset of the primary windings Lm when closed, such that the bypassed primary windings Lm do not contribute to the energy transfer; and a control unit 12 configured to control the bypass switch 11.

By opening and closing the bypass switch 11, a turn ratio between the primary windings Lm and the secondary windings Ls can be quickly and easily adjusted. For instance, by means of the bypass switch, the converter can be switched between a first and a second turn ratio and, thus, between a first and a second output voltage (for a given input voltage).

In the exemplary circuit diagram of Fig. 1, the subset of the primary windings Lm refers to the lower primary winding Lm which is bypassed if the switch 11 is closed. For instance, this bypassing can be understood as a short-circuiting of the primary winding Lm. However, the converter 10 could comprise a much larger number of primary windings Lm, e.g. eight primary windings. In a converter with more than two primary windings, the bypass switch 11 could be arranged to bypass a number of primary windings when closed.

The isolated converter can be a DC/DC converter which converts a DC input signal to a DC output signal with a different voltage level. In the exemplary embodiment of Fig. 1, the isolated converter 10 is an LLC converter. However, this is only an example, and the isolated converter could be of a different type, e.g. a flyback converter.

For example, the isolated converter comprises a switching circuit on the primary side of the galvanic isolation stage 13. The switching circuit can comprise two power switches S1, S2, e.g. a high-side switch and a low-side switch (half-bridge topology). Alternatively, the switching circuit could also comprise four power switches (full-bridge topology). By means of a switching frequency of said power switches, the output voltage can be adjusted within a certain range. This adjustability can be expanded by means of the bypass switch, so that the output voltage of the converter 10 can be set in a much wider range.

For example, a diode D1, D2 and a capacitor CD1, CDS2 can be connected in parallel to the respective power switches S1, S2.

The isolated converter 10, in the LLC design, can further comprise a resonant tank comprising a resonant capacitor Cr and a resonant inductance Llk which are connected to the primary windings Lm. Furthermore, a magnetizing inductance can arise from the primary windings Lm.

The control unit 12 can be a microcontroller, an ASIC or an FPGA.

The control unit 12 can comprise a number of outputs for controlling the switches 11, S1, S2. For instance, the control unit 12 outputs a control signal Ctrl to control the operation of the bypass switch 11.

Each secondary winding Ls of the isolated converter can be magnetically coupled to one of the primary windings. Thereby, one primary winding Lm can be coupled to more than one secondary winding.

In particular, the secondary windings Ls are connected together in parallel. As a result, a current through the secondary windings is evenly distributed. For instance, all secondary windings Ls have the same electronic characteristics, e.g. the same number of windings and/or the same voltage/current ratings.

A first terminal of the bypass switch 11 can be connected to a node between two of the primary windings Lm, which are connected in series. The second terminal of the bypass switch 11 can be connected to a node after the series connection of the primary windings Lm and/or to a ground terminal GND of the isolated converter.

Hereby, the first and second terminal of the bypass switch may refer to the respective sides of the bypass switch 11, i.e., source and drain if the bypass switch 11 is a MOSFET. The control signal Ctrl can be a voltage signal which is applied to a gate of the switch 11.

For example, if the bypass switch 11 is open (i.e., turned off), energy flows through all primary windings and they transfer this energy to the magnetically coupled secondary winding. If the bypass switch is closed (i.e., turned on), no energy flows through the "bypassed" primary winding and they transfer no energy to the secondary windings. As a consequence, the overall number of turns of the primary windings is reduced and the turn ratio (also referred to as: turns ratio) of the converter has changed. As the secondary side voltage (and thus the output voltage) depends on this turn ratio, this secondary side voltage can be quickly and easily increased respectively decreased via opening or closing the bypass switch 11.

In a conventional LLC converter, a setting of low voltages on the output side is often only possible by driving the power switches S1, S2 with high frequencies, which is not desirable as it leads to losses. The use of the bypass switch allows setting voltages on the secondary side of the converter which would be difficult or impossible to set by conventional means. As a consequence of this improved adjustability of the output voltage, the so-called "input window" of the converter is expanded, because the converter can now accept input voltages (Vinput) over a wider range and convert them into a desired output voltage.

The isolated converter 10 can further comprise a plurality of rectification circuits SR on the secondary side of the isolation stage 13. Thereby, each secondary winding Ls can be connected to one of the rectification circuits SR.

Each rectification circuit SR may comprise a controllable switch 14. In this way, active and/or synchronous rectification can be performed by the rectification circuits SR. For instance, each rectification circuit further comprises a diode D and a capacitor CDS connected in parallel to the switch 14.

For instance, the subset of the primary windings Lm, which can be bypassed via the switch 11, is magnetically coupled to a subset of the secondary windings Ls. In case the bypass switch 11 is open, this subset of secondary windings Ls receives energy from the subset of primary windings Lm.

In case the bypass switch 11 is closed, the control unit 12 can be configured to open the controllable switch 14 of each rectification circuits SR which is connected to one of the subset of the secondary windings, and which do no longer receiver energy from the primary side. In this way, the secondary windings Ls which do not receive energy when the switch 11 is closed can be disconnected from the remaining secondary side circuit for as long as the bypass switch 11 remains closed. This can prevent any negative effects that may arise from the connection of the unused secondary windings to the remaining circuit.

The converter 10 can further comprise a number of output capacitors Cout which can smooth the output voltage before forwarding it to a load R_load. The load R_load can be supplied by said output voltage. The load can be an electrical device or a further circuit stage.

The plurality of output capacitors Cout of the converter may be connected in parallel to supply the output voltage to the load R_load.

For instance, the converter can comprise multiple secondary side stages, each secondary side stage having at least one secondary winding Ls, at least one rectification circuit SR and at least one output capacitor Cout. A secondary side stage can be deactivated by means of bypassing the associated primary winding(s) and deactivating its rectification circuit(s) SR. This allows for a flexible control of the output voltage of the converter. In particular, the secondary side stages can be connected in parallel or in series, and a single stage can be deactivated.

In an example, the control unit 12 is configured to close the bypass switch 11 when a voltage across the primary windings Lm has dropped to zero. By means of such zero-voltage switching losses can be reduced and more efficient switching can be achieved (so-called soft switching).

The isolated converter 10 can be operable in a first operating mode and in a second operating mode. For instance, in the first operating mode, the control unit is configured to permanently open the bypass switch, and, in the second operating mode, the control unit is configured to permanently close the bypass switch. For instance, permanently open respectively close the switch means that the switch remains open or closed until the corresponding operating mode is cancelled and/or until the converter 10 is turned off.

In addition or alternatively, the control unit 10 can be configured to alternately open and close the bypass switch 11 with a first switching frequency. In this way, the voltage on the secondary side of the converter 10 can be set to a voltage level between that of the closed and the open switch. For instance, opening and closing the switch 11 with a first switching frequency results in a modulation of the secondary side voltage. The output capacitor(s) Cout on the secondary side can smoothen this modulation such that the output voltage which is supplied to the load R_load is a constant DC signal.

For instance, the output voltage of the converter 10 is a DC voltage which corresponds to the the voltage on the secondary windings Ls after rectification via the circuits SR and filtering via the capacitor(s) Cout.

For instance, the control unit is configured to alternately open and close the power switches S1, S2 on the primary side with a second switching frequency. For instance, the second switching frequency is in the range from 300 kHz to 1.5 MHz.

The first switching frequency (f1) for opening/closing the bypass switch 11 can be an integer multiple of this second switching frequency (f2), according to: f1 = N*f2.

For instance, the bypass switch 11 is driven by a PWM signal. A duty cycle of the PWM signal can be adjusted to further adapt the secondary side voltage and, thus, the output voltage of the converter 10.

The primary windings Lm, the secondary windings L2 and the galvanic isolation stage 13 can be components of a transformer of the converter 10. The transformer can be a matrix transformer.

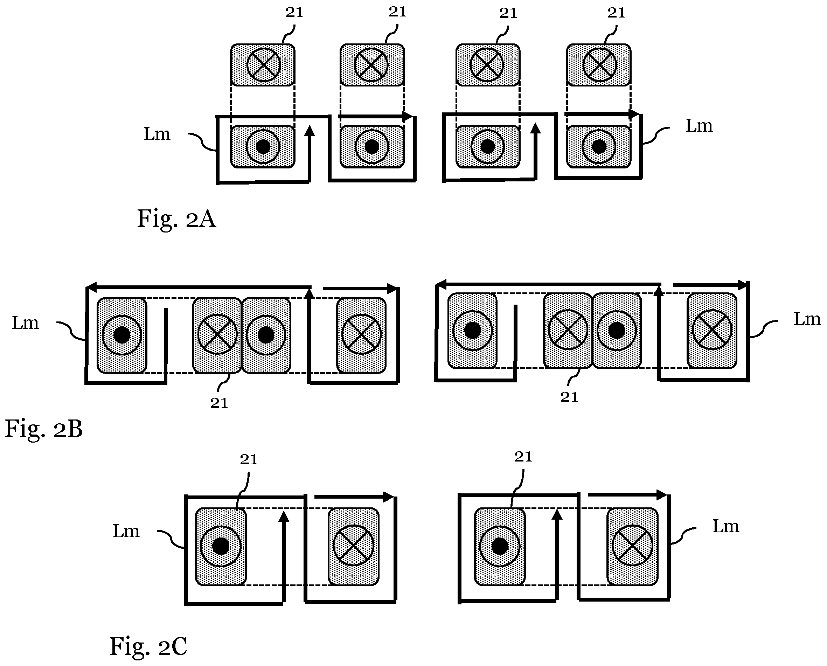

Figs. 2A-2C show top views of exemplary embodiments of the matrix transformer of the isolated converter 10. Thereby, each of Figs. 2A-2C shows the arrangement of two primary windings Lm around respective transformer cores 21 of the matrix transformer. The secondary windings are not shown in Figs. 2A-2C.

Fig. 2A shows a transformer arrangement with four transformer cores 21, wherein each primary winding Lm is arranged around two of the cores 21.

Fig. 2B shows an exemplary arrangement of two primary windings Lm in a two core 21 matrix transformer.

Fig. 2C shows a further exemplary arrangement of two primary windings Lm in a two core 21 matrix transformer with a different architecture.

Thereby, each transformer core 21 comprises at least two core legs which are connected by yokes. These yokes are indicated by dashed lines in Figs. 2A-C. The primary windings Lm can be arranged in spiraling patterns around the transformer core legs.

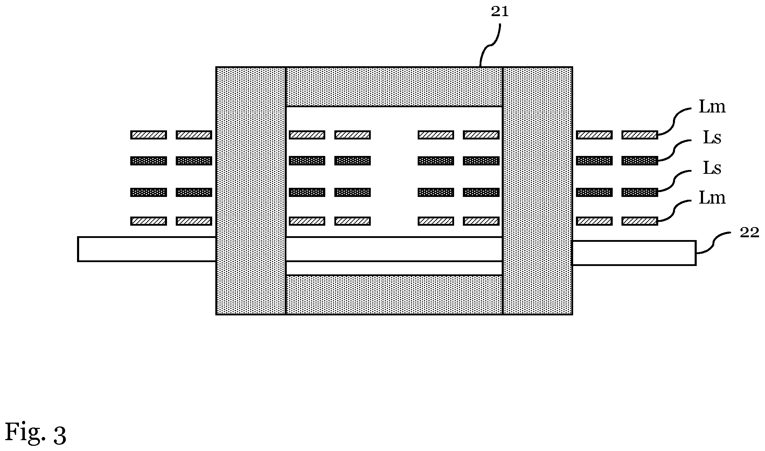

Fig. 3 shows a cross-sectional view of a transformer of the isolated converter 10 according to an embodiment. Thereby, two primary windings Lm and two secondary windings are arranged around the legs of the core 21 of the transformer. The primary and secondary windings Lm, Ls can be arranged in different windings patterns.

For instance, the transformer of the converter 10 can comprise a PCB 22. The primary windings Lm and/or the secondary windings Ls can be formed by conductive lines on the PCB 22. Thus, the transformer can be a planar transformer. The conductive lines forming the primary and secondary windings Lm, Ls can be arranged in multiple layers on top of each other on the PCB 22. The layers can be arranged on one side of the PCB or on both sides. The conductive lines forming a single primary or secondary winding Ls, Lm can be arranged on one layer or on multiple layers on top of each other.

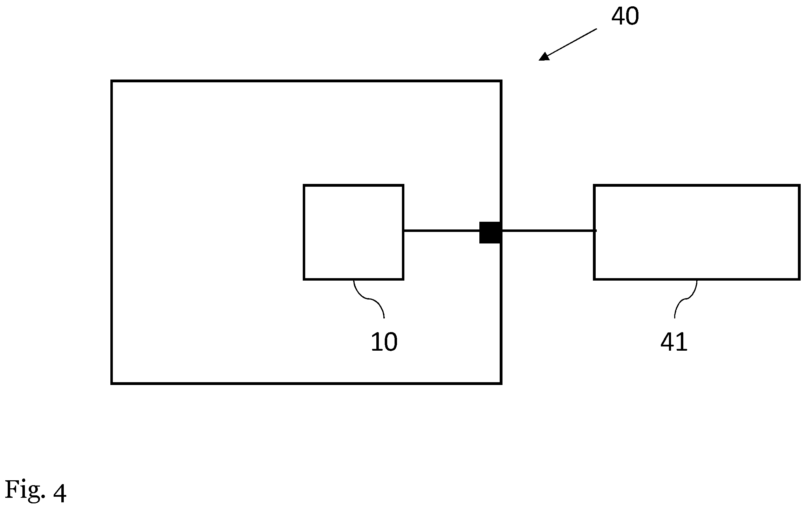

Fig. 4 shows a schematic diagram of an electrical power supply 40 according to an embodiment. The electrical power supply comprises the isolated converter 10.

For instance, the isolated converter 10 can be an IBC (intermediate bus converter) module of the power supply 40.

The power supply 40 supply a connected load 41 with electrical energy. For instance, the load 41 is a CPU, a GPU or another component with a high-power demand, e.g., in a datacenter environment. The load 41 could also be or comprise an LED luminaire.

Although the invention has been illustrated and described with respect to one or more implementations, equivalent alternations and modifications will occur to those skilled in the art upon the reading and understanding of this specification and the annexed drawings. In addition, while a particular feature of the invention may have been disclosed with respect to only one of the several implementations, such features may be combined with one or more other features of the other implementations as may be desired and advantageous for any given or particular application.

## Claims

1. An isolated converter (10), comprising:
a galvanic isolation stage (13);
at least two primary windings (Lm) on a primary side of the isolation stage (13), wherein the primary windings (Lm) are connected in series;
a plurality of secondary windings (Ls) on the secondary side of the isolation stage (13),
wherein the primary windings (Lm) are magnetically coupled to the secondary windings (Ls) in order to transfer energy from the primary to the secondary side of the isolation stage (13);
a bypass switch (11) arranged to selectively bypass a subset of the primary windings (Lm) when closed, such that the bypassed primary windings (Lm) do not contribute to the energy transfer; and
a control unit (12) configured to control the bypass switch (11).

2. The isolated converter (10) of claim 1,
wherein a first terminal of the bypass switch (11) is connected to a node between two of the primary windings (Lm) connected in series.

3. The isolated converter (10) of claim 2,
wherein a second terminal of the bypass switch (11) is connected to a node after the series connection of the primary windings (Lm) and/or to a ground terminal of the isolated converter (10).

4. The isolated converter (10) of any one of the preceding claims,
wherein the plurality of secondary windings (Ls) is connected in parallel.

5. The isolated converter (10) of any one of the preceding claims, further comprising:
a plurality of rectification circuits (SR) on the secondary side of the isolation stage (13);
wherein each secondary winding (Ls) is connected to one of the rectification circuits (SR).

6. The isolated converter (10) of claim 5,
wherein each rectification circuit (SR) comprises a controllable switch (14).

7. The isolated converter (10) of claim 6,
wherein the subset of the primary windings (Lm) is magnetically coupled to a subset of the secondary windings (Ls);
wherein the control unit (12) is configured to open the controllable switch (14) of each rectification circuit (SR) which is connected to one of the subset of the secondary windings (Ls) when the bypass switch (11) is closed.

8. The isolated converter (10) of any one of the preceding claims,
wherein the control unit (12) is configured to close the bypass switch (11) when a voltage across the primary windings (Lm) is zero.

9. The isolated converter (10) of any one of the preceding claims,
wherein the isolated converter (10) is operable in a first operating mode and in a second operating mode;
wherein, in the first operating mode, the control unit (12) is configured to permanently open the bypass switch (11), and, in the second operating mode, the control unit (12) is configured to permanently close the bypass switch (11).

10. The isolated converter (10) of any one of the preceding claims,
wherein the control unit (12) is configured to alternately open and close the bypass switch (11) with a first switching frequency.

11. The isolated converter (10) of any one of the preceding claims, further comprising:
a switching circuit on the primary side of the galvanic isolation stage (13), wherein the switching circuit comprises at least two power switches (S1, S2);
wherein the control unit (12) is configured to alternately open and close the power switches (S1, S2) of the switching circuit with a second switching frequency.

12. The isolated converter (10) of claim 10 and 11,
wherein the first switching frequency is an integer multiple of the second switching frequency.

13. The isolated converter (10) of any one of the preceding claims, comprising:
a matrix transformer, wherein the primary and the secondary windings (Ls) are components of the matrix transformer.

14. The isolated converter (10) of any one of the preceding claims,
wherein the isolated converter (10) is an LLC converter.

15. An electrical power supply (40) comprising the isolated converter (10) of any one of the preceding claims.
